(19) Europäisches Patentamt
European Patent Office
Office européen des brevets

(11) EP 4 465 244 B1

(12) EUROPEAN PATENT SPECIFICATION

(45) Date of publication and mention of the grant of the patent:
**09.09.2026 Bulletin 2026/37**

(21) Application number: **24175970.3**

(22) Date of filing: **15.05.2024**

(51) International Patent Classification (IPC):
***G06T 15/20*** (2011.01) ***G06T 15/08*** (2011.01)
***G06T 17/00*** (2006.01) ***G06N 3/04*** (2023.01)
***G06N 3/045*** (2023.01) ***G06N 3/08*** (2023.01)

(52) Cooperative Patent Classification (CPC):
**G06T 15/20; G06N 3/04; G06N 3/045; G06N 3/08; G06T 15/08; G06T 17/00**

# (54) METHOD AND APPARATUS FOR NEURAL RENDERING BASED ON BINARY REPRESENTATION

VERFAHREN UND VORRICHTUNG ZUR NEURONALEN DARSTELLUNG AUF DER BASIS EINER BINÄREN DARSTELLUNG

PROCÉDÉ ET APPAREIL DE RENDU NEURONAL SUR LA BASE D'UNE REPRÉSENTATION BINAIRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **17.05.2023 KR 20230063841**
**31.07.2023 KR 20230100073**

(43) Date of publication of application:
**20.11.2024 Bulletin 2024/47**

(73) Proprietors:
- **Samsung Electronics Co., Ltd.**
  **Suwon-si, Gyeonggi-do 16677 (KR)**
- **POSTECH Research and Business Development Foundation**
  **Pohang-si, Gyeongsangbuk-do 37673 (KR)**

(72) Inventors:
- **JANG, Seokhwan**
  **16678 Suwon-si (KR)**
- **PARK, Jaesik**
  **37673 Pohang-si (KR)**
- **SHIN, Seungjoo**
  **37673 Pohang-si (KR)**

(74) Representative: **Marks & Clerk LLP**
**15 Fetter Lane**
**London EC4A 1BW (GB)**

(56) References cited:
- **CHRISTIAN REISER ET AL: "MERF: Memory-Efficient Radiance Fields for Real-time View Synthesis in Unbounded Scenes", ARXIV.ORG, CORNELL UNIVERSITY LIBRARY, 201 OLIN LIBRARY CORNELL UNIVERSITY ITHACA, NY 14853, 23 February 2023 (2023-02-23), XP091445306**
- **ALEX YU ET AL: "PlenOctrees for Real-time Rendering of Neural Radiance Fields", ARXIV.ORG, CORNELL UNIVERSITY LIBRARY, 201 OLIN LIBRARY CORNELL UNIVERSITY ITHACA, NY 14853, 17 August 2021 (2021-08-17), XP091024422**
- **SEUNGJOO SHIN ET AL: "Binary Radiance Fields", ARXIV.ORG, CORNELL UNIVERSITY LIBRARY, 201 OLIN LIBRARY CORNELL UNIVERSITY ITHACA, NY 14853, 13 June 2023 (2023-06-13), XP091537374**
- **AYUSH TEWARI ET AL: "Advances in Neural Rendering", ARXIV.ORG, CORNELL UNIVERSITY LIBRARY, 201 OLIN LIBRARY CORNELL UNIVERSITY ITHACA, NY 14853, 30 March 2022 (2022-03-30), XP091192464**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 465 244 B1

## Description

TECHNICAL FIELD

The invention relates to computer-implemented neural rendering and neural scene representation for three-dimensional scenes, and in particular to methods and apparatuses using binary feature-grid representations for training and rendering.

BACKGROUND

Apparatuses and methods consistent with example embodiments relate to performing neural rendering based on binary representation to generate realistic and high-quality images.

Three-dimensional (3D) rendering is a field of computer graphics for rendering a 3D scene into a two-dimensional (2D) image. 3D rendering may be used in various application fields, such as a 3D game, virtual reality, an animation, a movie, and the like. Neural rendering may include a technique of converting a 3D scene into a 2D output image using a neural network. The neural network may be trained based on deep learning, and then perform an inference according to a purpose by mapping input data and output data in a nonlinear relationship with each other. The trained ability to generate such a mapping may be referred to as a learning ability of the neural network. The neural network may observe a real scene and learn a method of modeling and rendering the scene. Christian Reiser Et Al, "MERF: Memory-Efficient Radiance Fields for Real-time View Synthesis in Unbounded Scenes", arXiv:2302.12249, discloses a Memory-Efficient Radiance Field (MERF) representation that achieves real-time rendering of large-scale scenes in a browser. , LEX YU ET AL "PlenOctrees for Real-time Rendering of Neural Radiance Fields", arXiv:2103.14024, discloses a method to render Neural Radiance Fields (NeRFs) in real time using PlenOctrees, an octree-based 3D representation which supports view-dependent effects.

SUMMARY

This Summary is provided to introduce a selection of concepts in a simplified form that are further described below in the Detailed Description.

According to an aspect of the present disclosure, a processor-implemented training method for training a neural scene representation model in accordance with the attached claims is provided.

According to another aspect of the present disclosure, a neural rendering method in accordance with the attached claims is provided.

According to another aspect of the present disclosure, an electronic device in accordance with the attached claims is provided. a

Other features and aspects will be apparent from the following detailed description, the drawings, and the claims.

BRIEF DESCRIPTION OF THE DRAWINGS

FIG. 1 illustrates an example of neural scene representation (NSR).
FIG. 2 illustrates an example of an image generating operation using an NSR model.
FIG. 3 illustrates an example of a rendering process using a binary feature grid and an NSR model.
FIG. 4 illustrates an example of a process of deriving an input feature value of a query point using a binary feature grid.
FIG. 5 illustrates an example of a process of training a real-valued feature grid, a binary feature grid, and an NSR model.
FIG. 6 illustrates an example of a process of deriving an input feature value of a query point using a real-valued feature grid and a binary feature grid.
FIG. 7 illustrates an example of a neural rendering method.
FIG. 8 illustrates an example of a configuration of a neural rendering apparatus.
FIG. 9 illustrates an example of a configuration of a training apparatus.
FIG. 10 illustrates an example of a configuration of an electronic device.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

## DETAILED DESCRIPTION

The following detailed structural or functional description is provided as an example only and various alterations and modifications may be made to the examples. Here, the examples are not construed as limited to the disclosure and should be understood to include all changes, and replacements within the idea and the technical scope of the disclosure.

Terms, such as first, second, and the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component.

It should be noted that if one component is described as being "connected", "coupled", or "joined" to another component, a third component may be "connected", "coupled", and "joined" between the first and second components, although the first component may be directly connected, coupled, or joined to the second component.

The singular forms "a," "an," and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

As used herein, "at least one of A and B", "at least one of A, B, or C," and the like, each of which may include any one of the items listed together in the corresponding one of the phrases, or all possible combinations thereof.

Unless otherwise defined, all terms, including technical and scientific terms, used herein have the same meaning as commonly understood by one of ordinary skill in the art to which this disclosure pertains. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

Hereinafter, examples will be described in detail with reference to the accompanying drawings. When describing the examples with reference to the accompanying drawings, like reference numerals refer to like components and a repeated description related thereto will be omitted.

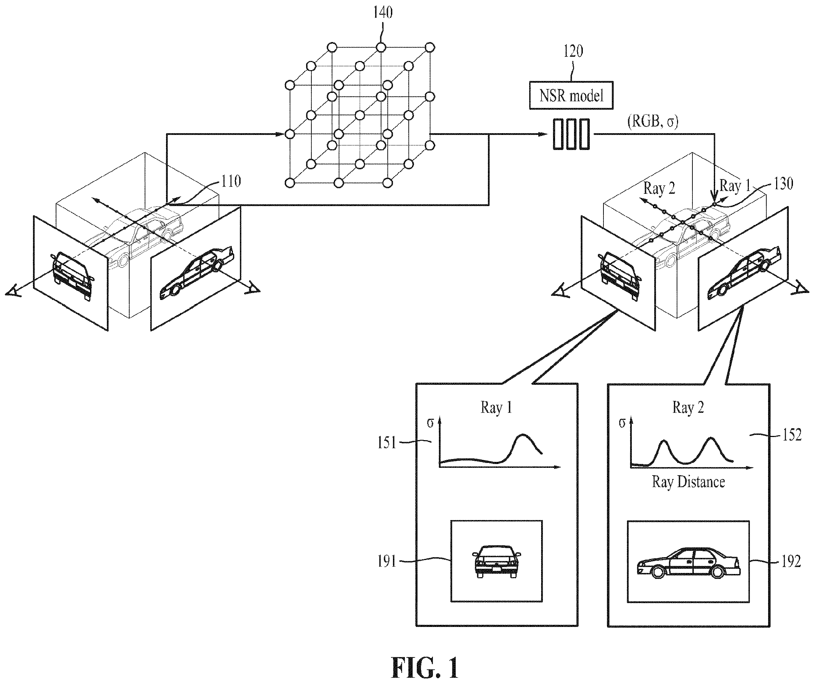

FIG. 1 illustrates an example of neural scene representation (NSR).

According to one embodiment, a three-dimensional (3D) scene in a 3D space may be represented by neural scene representation (NSR) using points in the 3D space. FIG. 1 may be an example of deriving, from a query input 110 specifying a point in a 3D space, a query output 130 corresponding to the point. A location that is specified by the query input 110 may be referred to as a query point. The query input 110 may specify a view or perspective that is requested for rendering, and may include information about a view direction and a position of the query point, or other parameters that may be needed to generate a desired image.

The query input 110 for each point may include coordinates representing a corresponding point in the 3D space and a direction of a view direction. The view direction may represent a direction (e.g., Ray 1 or Ray 2 of FIG. 1) passing through a pixel and/or points corresponding to the pixel from a viewpoint facing a two-dimensional (2D) scene to be synthesized and/or reconstructed. In FIG. 1, as an example of the query input 110, coordinates of (x, y, z) and direction information of $(\theta, \phi)$ are illustrated. (x, y, z) may be coordinates according to the Cartesian coordinate system based on a predetermined origin point, and $(\theta, \phi)$ may be angles formed between the view direction and two predetermined reference axes (e.g., the positive direction of the z-axis and the positive direction of the x-axis).

An NSR model 120 may output the query output 130 based on the query input 110. The NSR model 120 may be a neural network model trained to output the query output 130 based on the query input 110.

NSR data may be data representing scenes of the 3D space viewed from several view directions and may include, for example, neural radiance field (NeRF) data. The query output 130 may express a portion of the NSR data based on the query input 110. The NSR data may include color information and volume densities 151 and 152 of the 3D space for each point and for each view direction.

The color information may include color values according to a color space (e.g., a red value, a green value, and a blue value according to an RGB color space). The volume densities 151 and 152, denoted as $\sigma$, at a specific point may be understood as a measure of likelihood (e.g., differential probability) that a ray ends at an infinitesimal particle at the specific location. In the graphs of the volume densities 151 and 152 shown in FIG. 1, the horizontal axis may denote a ray distance from a viewpoint along a view direction, and the vertical axis may denote the value of the volume density according to the distance. A color value (e.g., an RGB value) may also be determined according to the ray distance along the view direction. However, the query output 130 is not limited to the above description and may vary according to the design.

The NSR model 120 may be implemented as a neural network, and may learn the NSR data corresponding to 3D scene information through deep learning. An image of a specific view specified by the query input 110 may be rendered by outputting the query output 130 from the NSR model 120 through the query input 110. The NSR model 120 may include a multi-layer perceptron (MLP)-based neural network.

For the query input 110 of (x, y, z, θ, ϕ) specifying a point of a ray, the neural network may be trained to output (an RGB value, volume densities 151 and 152) of the corresponding point. For example, a view direction may be defined for each pixel of 2D scene images 191 and 192, and output values (e.g., the NSR data) of all sample points in the view direction may be calculated through a neural network operation. In FIG. 1, the 2D scene image 191 of a vehicle object viewed from the front and the 2D scene image 192 of the vehicle object viewed from the side are shown. The 2D scene images 191 and 192 may correspond to a rendering result.

According to one embodiment, a feature grid 140 may be used for NSR processing. The feature grid 140 may represent a structured arrangement of feature values within a particular space (e.g., a 2D or 3D space), used in computer vision or image processing, and may be defined by intersecting points or locations where the feature values are placed. The number of feature values may be determined based on the size (or resolution) of the feature grid 140. The feature values of the feature grid 140 may correspond to a 3D scene in a 3D space. The NSR model 120 may be trained to provide data representing a 3D scene using the feature grid 140. Parameters of the NSR model 120 and the feature values of the feature grid 140 may be appropriately adjusted to represent a 3D scene through training.

A method of representing a 3D scene based on NSR data may include a method using a neural network, a method using an explicit structure (e.g., a pre-defined structure or framework), and a method of mixing and using a neural network and an explicit structure. The feature grid 140 may be an example of the explicit structure. When the explicit structure is used, the size of a neural network required for desired rendering quality may decrease. According to one embodiment, the feature grid 140 having feature values in a binary format may be used to train the NSR model 120, and therefore the data size of the feature grid 140 and the training time for the NSR model 120 may decrease. According to one embodiment, as the feature grid 140 is adopted, a small NSR model 120 may be used and the size of the feature grid 140 may decrease as the binary format is used. Therefore, according to one embodiment, the size of a rendering model (e.g., a mixed structure of the NSR model 120 and the feature grid 140) used for neural rendering may generally decrease.

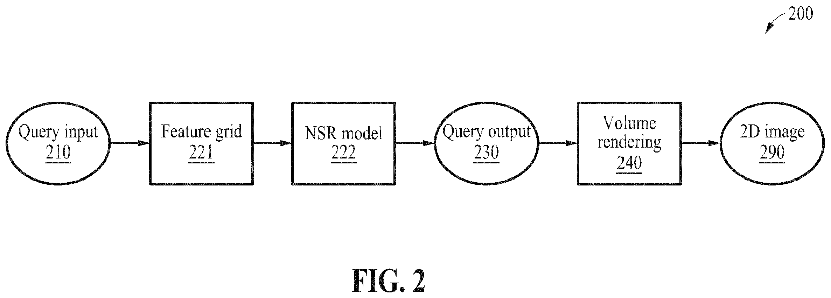

FIG. 2 illustrates an example of an image generating operation using an NSR model. A 2D image 290 may be generated from a query input 210 for a 3D space through an image generation operation 200 of FIG. 2. To generate the 2D image 290, view directions toward each pixel of the 2D image 290 from arbitrary viewpoints may be defined. A viewpoint may be, for example, a position at which a camera having a predetermined field of view (FOV) is able to capture a scene corresponding to the 2D image 290. Points (e.g., a sample point) on a ray following the view direction in a 3D space may be sampled. For each pixel of the 2D image 290, the query input 210 including a view direction corresponding to each pixel and coordinates indicating each sample point on the ray in the view direction may be generated.

When the query input 210 is given, a query output 230 may be generated using a feature grid 221 and an NSR model 222. Query outputs 230 for points on the ray in the view direction corresponding to one pixel of the 2D image 290 may be calculated, respectively. The query output 230 may include color information and a volume density. Volume rendering 240 may be performed using query outputs calculated for the same pixel of the 2D image 290. Volume rendering 240 may include an operation of accumulating color information and volume densities according to a view direction. Based on query outputs of an NSR module 220 for query inputs of sample points of a ray in a view direction, pixel information corresponding to the view direction may be determined by accumulating color information and volume densities calculated for the sample points of the ray. Pixel values (e.g., color values of pixels) of pixels included in the 2D image 290 may be determined by performing volume rendering 240 for each pixel of the 2D image 290. The 2D image 290 may be generated by obtaining pixel values for all pixels.

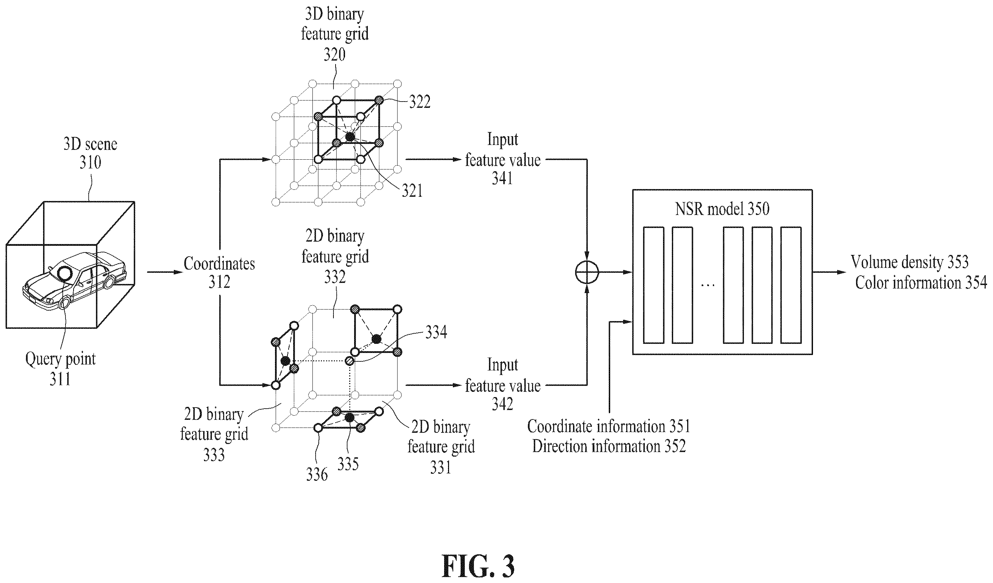

FIG. 3 illustrates an example of a rendering process using a binary feature grid and an NSR model. Referring to FIG. 3, when a query point 311 of a 3D scene 310 is given by a query input, input feature values 341 and 342 corresponding to the query point 311 may be determined. The input feature value 341 may be determined using a 3D binary feature grid 320 and the input feature value 342 may be determined using at least one of 2D binary feature grids 331, 332, and 333.

The 3D binary feature grid 320 and the 2D binary feature grids 331, 332, and 333 may include feature values in the binary format corresponding to the 3D scene 310. The 3D binary feature grid 320 may include feature values in the real number format directly corresponding to the 3D scene 310 and the 2D binary feature grids 331, 332, and 333 may include feature values in the binary format corresponding to a 2D scene onto which the 3D scene 310 is projected. A reference feature value 322 around a query point 321 in the 3D binary feature grid 320 may be extracted based on coordinates 312 of the query point 311. The query point 311 and the query point 321 may indicate the same point in the 3D space. Feature values of intersecting points of a grid cell in which the query point 321 is included may correspond to reference feature values of the query point 321. In the case of 3D binary feature grid 320, 8 reference feature values may exist for each query point.

The input feature value 341 may be determined using a reference feature value 322. The input feature value 341 may be determined by performing an interpolation operation based on the reference feature values around the query point 321 including the reference feature value 322. The reference feature values, such as the reference feature value 322, may have the binary format and the input feature value 341 may have the real number format.

The 2D binary feature grid 332 may represent a 2D scene in which the 3D scene 310 is projected onto a 2D plane. For example, the 3D scene 310 may represent a 3D space of an x-axis, a y-axis, and a z-axis. In this case, the 2D binary

feature grid 331 may represent a 2D scene in which the 3D scene 310 is projected onto an xy plane, the 2D binary feature grid 332 may represent a 2D scene in which the 3D scene 310 is projected onto an xz plane, and the 2D binary feature grid 333 may represent a 2D scene in which the 3D scene 310 is projected onto a yz plane.

Based on the coordinates 312 of the query point 311, 2D points on 2D planes may be determined as a query point 334 is projected onto the 2D planes. The query point 311 and the query point 334 may indicate the same point in the 3D space. Reference feature values around each 2D point may be extracted. For example, a reference feature value 336 around a 2D point 335 may be extracted. Feature values of intersecting points of a grid cell in which the 2D point 335 is included may correspond to reference feature values of the 2D point 335. In the case of 2D binary feature grids 331, 332, and 333, 4 reference feature values may exist for each 2D point.

The input feature value 342 may be determined using the reference feature value 336. The input feature value 342 may be determined by performing an interpolation operation based on the reference feature values around the 2D point 335 including the reference feature value 336. The reference feature values, such as the reference feature value 336, may have the binary format and the input feature value 342 may have the real number format.

The input feature value 342 may include at least one of feature values of the 2D binary feature grids 331, 332, and 333. A first feature value may be determined by reference feature values of the 2D binary feature grid 331, a second feature value may be determined by reference feature values of the 2D binary feature grid 332, a third feature value may be determined by reference feature values of the 2D binary feature grid 333, and the input feature value 342 may include at least one of the first feature value, the second feature value, and the third feature value.

Input data of an NSR model 350 may be constructed based on the input feature values 341 and 342. FIG. 3 illustrates an example that two types of feature grids, which are a 3D feature grid (e.g., the 3D binary feature grid 320) and a 2D feature grid (e.g., the 2D binary feature grids 331, 332, and 333), are used. However, only one of the two may be used. The input data of the NSR model 350 may include the input feature value 341 derived from the 3D binary feature grid 320 and/or the input feature value 342 derived from at least one of the 2D binary feature grids 331, 332, and 333. The input feature value 341 and the input feature value 342 may be concatenated and then input into the NSR model 350.

In addition to the input feature value 341 and/or the input feature value 342 of the NSR model 350, the input data may further include coordinate information 351 and direction information 352. The query input may include the coordinates 312 and a view direction of the query point 311. The coordinate information 351 may be determined based on the coordinates 312 of the query point 311. The coordinate information 351 may be the same as the coordinates 312 or may be a result obtained by performing predetermined processing on the coordinates 312. For example, the coordinate information 351 may be determined through positional encoding based on the coordinates 312. The direction information 352 may correspond to a view direction of the query point 311.

The NSR model 350 may generate a query output corresponding to a query input based on the query input and an input feature value (e.g., the input feature value 341 and/or the input feature value 342). The query output may include a volume density 353 and color information 354.

A binary feature grid (e.g., the 3D binary feature grid 320 and the 2D binary feature grids 331, 332, and 333) including feature values in the binary format may be obtained using a real-valued feature grid. Training processes of the NSR model 350 using the real-valued feature grid and the binary feature grid are described below. After the training process of the NSR model 350 is completed using the binary feature grid, neural rendering may be performed using the binary feature grid without the real-valued feature grid during an inference phase. FIG. 3 shows a neural rendering process after completion of training. The neural rendering process may be referred to as inference.

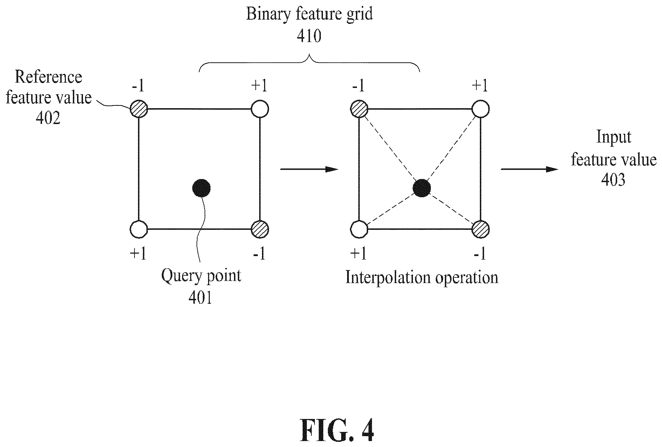

FIG. 4 illustrates an example of a process of deriving an input feature value of a query point using a binary feature grid. Referring to FIG. 4, when a query point 401 is given, reference feature values (e.g., a reference feature value 402) around the query point 401 may be extracted from feature values of a binary feature grid 410 (e.g., the 3D binary feature grid 320 and the 2D binary feature grids 331, 332, and 333 of FIG. 3). The reference feature values may have the binary format expressing the sign of +1 or -1. However, the sign expression corresponds to an example of the binary format and is not limited thereto.

When the reference feature values around the query point 401 are extracted, an input feature value 403 may be determined based on an interpolation operation using the extracted reference feature values. The interpolation operation may be performed based on a distance between the query point 401 and each of the reference feature values. In the interpolation operation, a great weight may be assigned to a reference feature value close to the query point 401.

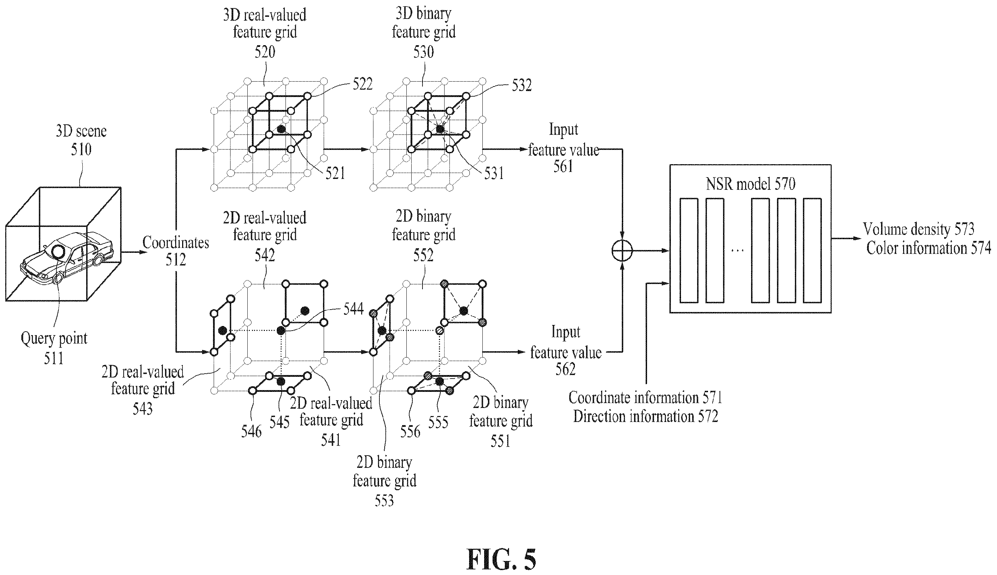

FIG. 5 illustrates an example of a process of training an NSR model using a real-valued feature grid and a binary feature grid. Referring to FIG. 5, when a query point 511 of a 3D scene 510 is given by a query input, input feature values 561 and 562 corresponding to the query point 511 may be determined. The input feature value 561 may be determined using a 3D real-valued feature grid 520 and a 3D binary feature grid 530 and the input feature value 562 may be determined using at least one of 2D real-valued feature grids 541, 542, and 543 and at least one of 2D binary feature grids 551, 552, and 553. The 3D binary feature grid 530 may correspond to a binary version of the 3D real-valued feature grid 520 and the 2D binary feature grids 551, 552, and 553 may be binary versions of the 2D real-valued feature grids 541, 542, and 543, respectively.

Unlike the inference process, in the training process, a real-valued feature grid (e.g., the 3D real-valued feature grid 520 and 2D real-valued feature grids 541, 542, and 543) may be used. When training is completed, a real-valued feature grid may be discarded and rendering may be performed using a binary feature grid (e.g., the 3D binary feature grid 530 and the 2D binary feature grids 551, 552, and 553).

The 3D real-valued feature grid 520 and the 2D real-valued feature grids 541, 542, and 543 may include feature values in the real number format corresponding to the 3D scene 510. The 3D real-valued feature grid 520 may include feature values in the real number format directly corresponding to the 3D scene 510, and the 2D real-valued feature grids 541, 542, and 543 may include feature values in the real number format corresponding to a 2D scene onto which the 3D scene 510 is projected.

A reference feature value 522 around a query point 521 in the 3D real-valued feature grid 520 may be extracted based on coordinates 512 of the query point 511. The query point 511 and a query point 521 may indicate the same point in the 3D space. Feature values of intersecting points of a grid cell in which the query point 521 is included may correspond to reference feature values of the query point 521. In the case of 3D real-valued feature grid 520, 8 reference feature values may exist for each query point.

Binary reference feature values, in the binary format, of the 3D binary feature grid 530 may be determined by binarizing real-valued reference feature values around the query point 521. The 3D real-valued feature grid 520 and the 3D binary feature grid 530 may be the same size. Positions of real-valued feature values in the 3D real-valued feature grid 520 may respectively correspond to positions of binary reference feature values in the 3D binary feature grid 530. For example, the query point 521 and a query point 531 may indicate the same point in the 3D space and the binary reference feature value 532 may be determined in response to a binarization operation on the real-valued reference feature value 522.

The input feature value 561 may be determined using the binary reference feature value 532. The input feature value 561 may be determined by performing an interpolation operation based on binary reference feature values around the query point 531 including the binary reference feature value 532. The binary reference feature values, such as the binary reference feature value 532, may have the binary format, and the input feature value 561 may have the real number format.

The 2D real-valued feature grids 541, 542, and 543 may represent a 2D scene in which the 3D scene 510 is projected onto a 2D plane. For example, the 3D scene 510 may represent a 3D space of an x-axis, a y-axis, and a z-axis. In this case, the 2D real-valued feature grid 541 may represent a 2D scene in which the 3D scene 510 is projected onto an xy plane, the 2D real-valued feature grid 542 may represent a 2D scene in which the 3D scene 510 is projected onto an xz plane, and the 2D real-valued feature grid 543 may represent a 2D scene in which the 3D scene 510 is projected onto a yz plane.

Based on the coordinates 512 of the query point 511, 2D points on 2D planes may be determined as a query point 544 is projected onto the 2D planes. The query point 511 and a query point 544 may indicate the same point in the 3D space. Real-valued reference feature values around each 2D point may be extracted. For example, a reference feature value 546 around a 2D point 545 may be extracted. Feature values of intersecting points of a grid cell in which the 2D point 545 is included may correspond to real-valued reference feature values of the 2D point 545. In the case of 2D real-valued feature grids 541, 542, and 543, 4 reference feature values may exist for each 2D point.

Binary reference feature values, in the binary format, of the 2D binary feature grids 551, 552, and 553 may be determined by binarizing real-valued reference feature values around each 2D point. The 2D real-valued feature grids 541, 542, and 543 and the 2D binary feature grids 551, 552, and 553 may be the same size. Positions of real-valued feature values in the 2D real-valued feature grids 541, 542, and 543 may respectively correspond to positions of the binary reference feature values in the 2D binary feature grids 551, 552, and 553. For example, the 2D point 545 and a 2D point 555 may indicate the same point in the 2D plane and a binary reference feature value 556 may be determined in response to a binarization operation on the real-valued reference feature value 546.

The input feature value 562 may be determined using the binary reference feature value 556. The input feature value 562 may be determined by performing an interpolation operation based on binary reference feature values around the 2D point 555 including the binary reference feature value 556. The binary reference feature values, such as the binary reference feature value 556, may have the binary format, and the input feature value 562 may have the real number format.

The input feature value 562 may include at least one of feature values of the 2D binary feature grids 551, 552, and 553. A first feature value may be determined by binary reference feature values of the 2D binary feature grid 551, a second feature value may be determined by binary reference feature values of the 2D binary feature grid 552, a third feature value may be determined by binary reference feature values of the 2D binary feature grid 553, and the input feature value 562 may include at least one of the first feature value, the second feature value, and the third feature value.

Input data of an NSR model 570 may be constructed based on the input feature values 561 and 562. FIG. 5 illustrates an example where two types of feature grids, which are a 3D feature grid (e.g., the 3D real-valued feature grid 520 and the 3D binary feature grid 530) and a 2D feature grid (e.g., the 2D real-valued feature grids 541, 542, and 543 and the 2D binary feature grids 551, 552, and 553), are used. However, only one of the two may be used. Input data of the NSR model 570 may include the input feature value 561 derived from the 3D real-valued feature grid 520 and the 3D binary

feature grid 530 and/or the input feature value 562 derived from at least one of the 2D real-valued feature grids 541, 542, and 543 and the 2D binary feature grids 551, 552, and 553.

In addition to the input feature value 561 and/or the input feature value 562 of the NSR model 570, the input data may further include coordinate information 571 and direction information 572. The query input may include the coordinates 512 and a view direction of the query point 511. The coordinate information 571 may be determined based on the coordinates 512 of the query point 511. The coordinate information 571 may be the same as the coordinates 512 or may be a result obtained by performing predetermined processing on the coordinates 512. For example, the coordinate information 571 may be determined through positional encoding based on the coordinates 512. The direction information 572 may correspond to a view direction of the query point 511.

The NSR model 570 may generate a query output corresponding to a query input based on the query input and an input feature value (e.g., the input feature value 561 and/or the input feature value 562). The query output may include a volume density 573 and color information 574. When the query output is generated, a loss corresponding to a difference between the query output and training data may be determined. The training data may include a query input corresponding to a training input and a label (i.e., a ground-truth value) corresponding to a training output. The loss may be determined by comparing the query output with the label. Based on the loss of the query output, a real-valued feature grid (e.g., the 3D real-valued feature grid 520 and the 2D real-valued feature grids 541, 542, and 543), and a binary feature grid (e.g., the 2D binary feature grid 530 and the 2D binary feature grids 551, 552, and 553), the NSR model 570 may be trained.

A sign function of Equation 1 shown below may be used for a forward propagation process in which real-valued reference feature values of a real-valued feature grid (e.g., the 3D real-valued feature grid 520 and the 2D real-valued feature grids 541, 542, and 543) are converted into binary reference feature values of a 2D binary feature grid (e.g., the 2D binary feature grid 530 and the 2D binary feature grids 551, 552, and 553).

[Equation 1]

$$\theta' = \mathtt{sign}(\theta) = \begin{cases} +1 & \text{if } \theta \geq 0, \\ -1 & \text{otherwise,} \end{cases}$$

In Equation 1, θ' may denote an output (e.g., a binary feature value) of the sign function, θ may denote an input (e.g., a real-valued feature value) to the sign function, and sign may denote the sign function. When an input is greater than or equal to "0", the sign function may output +1 and when an input is less than "0", the sign function may output -1. The sign function may be an example of a function used for a binarization process and the binarization process is not limited thereto.

Due to a differentiating characteristic of the sign function, the sign function may not appropriately backwardly propagate gradient. According to one embodiment, based on a straight-through estimator (STE) method, a substitution function of the sign function may be used for backward propagation. Equation 2 shown below may represent a substitution gradient based on the substitution function.

[Equation 2]

$$\frac{\partial \mathcal{L}}{\partial \theta} = \frac{\partial \mathcal{L}}{\partial \theta'} \mathbb{1}_{|\theta| \leq 1},$$

In Equation 2, $\frac{\partial \mathcal{L}}{\partial \theta}$ may denote the backpropagation gradient,

$$\frac{\partial \mathcal{L}}{\partial \theta'} \mathbb{1}_{|\theta| \leq 1}$$

may denote substitution gradient based on the substitution function, and

$$\mathbb{1}_{|\theta|\leq 1}$$

may denote the substitution function. According to the substitution function, in response to an input of an absolute value that is less than or equal to 1, 1 may be output. According to Equation 2, in the case of backpropagation, the gradient may be propagated to a real-valued feature grid by passing through a binary feature grid. After the NSR model 570 is trained using a real-valued feature grid (e.g., the 3D real-valued feature grid 520 and the 2D real-valued feature grids 541, 542, and 543) and a binary feature grid (e.g., the 2D binary feature grid 530 and the 2D binary feature grids 551, 552, and 553), the trained NSR model 570 may perform neural rendering using the binary feature grid without the real-valued feature grid during the inference process.

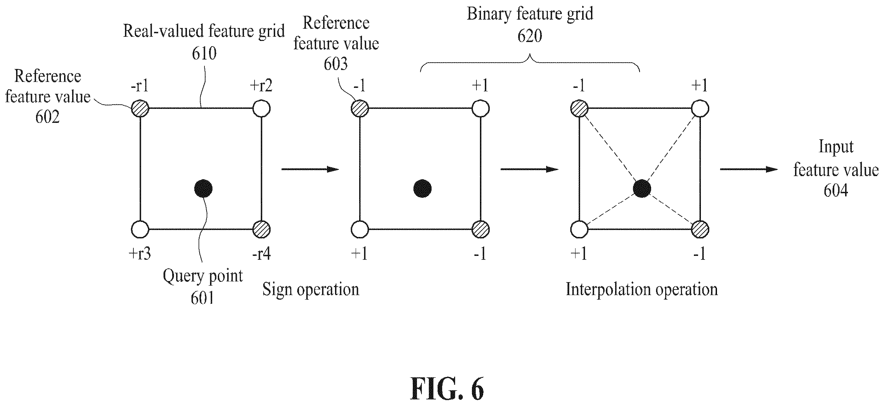

FIG. 6 illustrates an example of a process of deriving an input feature value of a query point using a real-valued feature grid and a binary feature grid.

Referring to FIG. 6, when a query point 601 is given, real-valued reference feature values (e.g., a reference feature value 602) around the query point 601 may be extracted from real-valued feature values of a real-valued feature grid 610 (e.g., the 3D real-valued feature grid 520 and the 2D real-valued feature grids 541, 542, and 543 of FIG. 5). For example, the real-valued reference feature values may correspond to various real number values, such as -r1, +r2, +r3, and -r4.

The real-valued reference feature values may be converted into binary reference feature values (e.g., a reference feature value 603) through a binarization operation (e.g., a sign operation). The binary reference feature values may have the binary format expressing the sign of +1 or -1. However, the sign expression corresponds to an example of the binary format and is not limited thereto.

When the real-valued reference feature values around the query point 601 are extracted and the extracted real-valued reference feature values are converted into binary reference feature values, an input feature value 604 may be determined based on an interpolation operation using the binary reference feature values. The interpolation operation may be performed based on a distance between a corresponding point of the query point 601 in a binary feature grid 620 and each of the binary reference feature values. In the interpolation operation, a great weight may be assigned to a reference feature value close to the corresponding point.

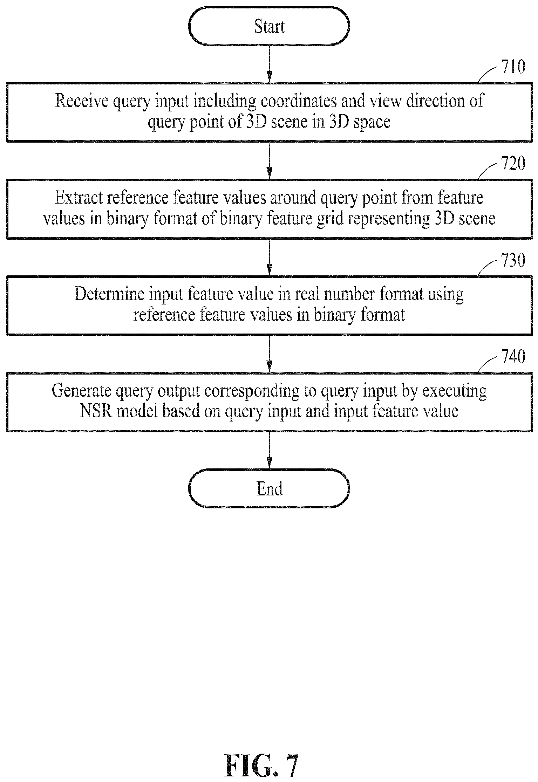

FIG. 7 illustrates an example of a neural rendering method. Referring to FIG. 7, in operation 710, a neural rendering apparatus may receive a query input including coordinates and a view direction of a query point of a 3D scene in a 3D space, in operation 720, may extract reference feature values around the query point from feature values in the binary format of a binary feature grid representing the 3D scene, in operation 730, may determine an input feature value in the real number format using the reference feature values in the binary format, and in operation 740, may generate a query output corresponding to the query input by executing an NSR model based on the query input and the input feature value.

Operation 730 may include an operation of determining an input feature value by performing an interpolation operation based on the reference feature values.

The binary feature grid may include a 3D binary feature grid representing a 3D scene and a 2D binary feature grid representing a 2D scene in which the 3D scene is projected onto a 2D plane.

Operation 720 may include an operation of extracting first reference feature values around the query point from the 3D binary feature grid, an operation of determining a 2D point by projecting the query point onto the 2D plane, and an operation of extracting second reference feature values around the 2D point from the 2D binary feature grid.

The input feature value may include a first input feature value and a second input feature value. Operation 730 may include an operation of determining a first input feature value by performing an interpolation operation based on the first reference feature values and an operation of determining a second input feature value by performing an interpolation operation based on the second reference feature values.

A binary feature grid including feature values in the binary format may be trained using a real-valued feature grid including feature values in the real number format, and after the training of the NSR model is completed, the trained NSR model may perform neural rendering using the binary feature grid without the real-valued feature grid.

The query output may include color information and a volume density based on the query input.

The descriptions provided with reference to FIGS. 1 to 6 and FIGS. 8 to 10 may apply to the neural rendering method of FIG. 7.

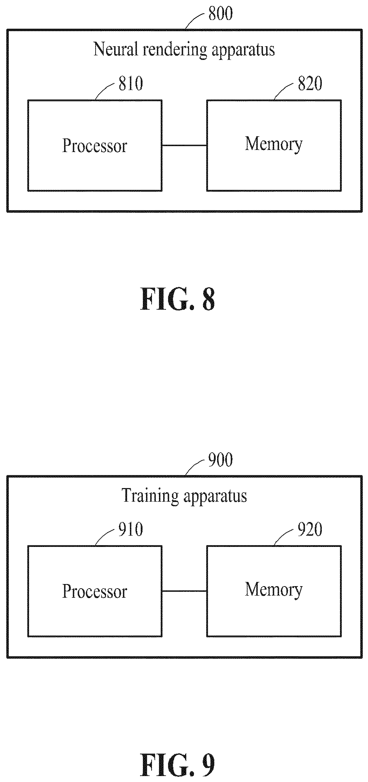

FIG. 8 illustrates an example of a configuration of a neural rendering apparatus. Referring to FIG. 8, a neural rendering apparatus 800 may include a processor 810 and a memory 820. The memory 820 may be connected to the processor 810 and store instructions executable by the processor 810, data to be computed by the processor 810, or data processed by the processor 810. The memory 820 may include, for example, a non-transitory computer-readable storage medium, for example, a high-speed random access memory (RAM) and/or a non-volatile computer-readable storage medium (for example, at least one disk storage device, a flash memory device, or other non-volatile solid-state memory devices).

The processor 810 may execute instructions to perform the operations described herein with reference to FIGS. 1 to 7, FIG. 9 and FIG. 10. For example, the processor 810 may be configured to receive a query input including coordinates and a view direction of a query point of a 3D scene in a 3D space, extract reference feature values around the query point from feature values in the binary format of a binary feature grid representing the 3D scene, determine an input feature value in the real number format using the reference feature values in the binary format, and generate a query output corresponding to the query input by executing an NSR model based on the query input and the input feature value. In addition, the descriptions provided with reference to FIGS. 1 to 7, FIG. 9, and FIG. 10 may apply to the neural rendering apparatus 800.

FIG. 9 illustrates an example of a configuration of a training apparatus. Referring to FIG. 9, a training apparatus 900 may include a processor 910 and a memory 920. The memory 920 may be connected to the processor 910 and store instructions executable by the processor 910, data to be computed by the processor 910, or data processed by the processor 910. The memory 920 may include a non-transitory computer-readable medium (for example, a high-speed random access memory) and/or a non-volatile computer-readable medium (e.g., at least one disk storage device, flash memory device, or another non-volatile solid-state memory device).

The processor 910 may execute the instructions to perform the operations described above with reference to FIGS. 1 to 8, and 10. For example, the processor 910 may be configured to receive a query input including coordinates and a view direction of a query point of a 3D scene in a 3D space, extract real-valued reference feature values around the query point from feature values in the real number format of a real-valued feature grid representing the 3D scene, determine binary reference feature values in the binary format of a binary feature grid by binarizing the real-valued reference feature values, determine an input feature value in the real number format using the binary reference feature values, generate a query output corresponding to the query input by executing an NSR model based on the query input and the input feature value, and train the NSR using the real-valued feature grid and the binary feature grid based on a loss value according to the query output. In addition, the description provided with reference to FIGS. 1 to 8 and FIG. 10 may apply to the training apparatus 900.

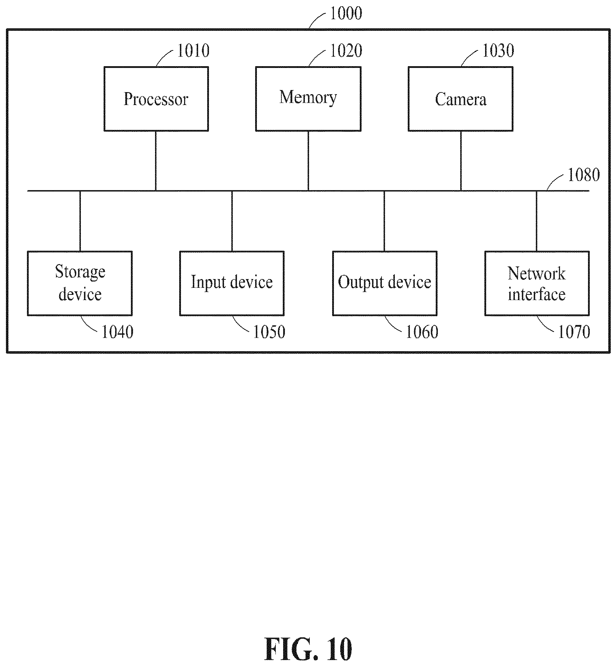

FIG. 10 illustrates an example of a configuration of an electronic device. Referring to FIG. 10, an electronic device 1000 may include a processor 1010, a memory 1020, a camera 1030, a storage device 1040, an input device 1050, an output device 1060, and a network interface 1070 that may communicate with each other through a communication bus 1080. For example, the electronic device 1000 may be implemented as at least a part of a mobile device such as a mobile phone, a smartphone, a personal digital assistant (PDA), a netbook, a tablet personal computer (PC) or a laptop computer, a wearable device such as a smartwatch, a smart band or smart glasses, a computing device such as a desktop or a server, a home appliance such as a television (TV), a smart TV or a refrigerator, a security device such as a door lock, or a vehicle such as an autonomous vehicle or a smart vehicle. The electronic device 1000 may structurally and/or functionally include the neural rendering apparatus 800 of FIG. 8 and/or the training apparatus 900 of FIG. 9.

The processor 1010 may execute functions and instructions to be executed in the electronic device 1000. For example, the processor 1010 may process instructions stored in the memory 1020 or the storage device 1040. The processor 1010 may perform the operations described with reference to FIGS. 1 to 9. The memory 1020 may include a computer-readable storage medium or a computer-readable storage device. The memory 1020 may store instructions to be executed by the processor 1010 and may store related information while software and/or an application is executed by the electronic device 1000.

The camera 1030 may capture a photo and/or record a video. The camera 1030 may generate original training images of base views for a target scene. The storage device 1040 may include a computer-readable storage medium or computer-readable storage device. The storage device 1040 may store a larger quantity of information than the memory 1020 for a long time. For example, the storage device 1040 may include a magnetic hard disk, an optical disc, a flash memory, a floppy disk, or other non-volatile memories known in the art.

The input device 1050 may receive an input from the user in traditional input manners through a keyboard and a mouse and in new input manners such as a touch input, a voice input, and an image input. For example, the input device 1050 may include a keyboard, a mouse, a touch screen, a microphone, or any other device that detects the input from the user and transmits the detected input to the electronic device 1000. The output device 1060 may provide an output of the electronic device 1000 to the user through a visual, auditory, or haptic channel. The output device 1060 may include, for example, a display, a touch screen, a speaker, a vibration generator, or any other device that provides the output to the user. The network interface 1070 may communicate with an external device through a wired or wireless network.

The units described herein may be implemented using a hardware component, a software component and/or a combination thereof. A processing device may be implemented using one or more general-purpose or special-purpose computers, such as, for example, a processor, a controller and an arithmetic logic unit (ALU), a DSP, a microcomputer, an FPGA, a programmable logic unit (PLU), a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular;

however, one skilled in the art will appreciate that a processing device may include multiple processing elements and multiple types of processing elements. For example, the processing device may include a plurality of processors, or a single processor and a single controller. In addition, different processing configurations are possible, such as parallel processors.

The software may include a computer program, a piece of code, an instruction, or some combination thereof, to independently or collectively instruct or configure the processing device to operate as desired. Software and data may be stored in any type of machine, component, physical or virtual equipment, or computer storage medium or device capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described examples may be recorded in non-transitory computer-readable media including program instructions to implement various operations of the above-described examples. The media may also include, alone or in combination with the program instructions, data files, data structures, and the like. The program instructions recorded on the media may be those specially designed and constructed for the purposes of examples, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher-level code that may be executed by the computer using an interpreter.

The above-described devices may be configured to act as one or more software modules in order to perform the operations of the above-described examples, or vice versa.

As described above, although the examples have been described with reference to the limited drawings, a person skilled in the art may apply various technical modifications and variations based thereon. For example, suitable results may be achieved if the described techniques are performed in a different order and/or if components in a described system, architecture, device, or circuit are combined in a different manner and/or replaced or supplemented by other components.

Accordingly, in addition to the above disclosure, the scope of the disclosure is defined by the claims, and all variations within the scope of the claims are to be construed as being included in the disclosure.

## Claims

**1.** A processor-implemented training method for training a neural scene representation, NSR, model (570) to represent scenes of a three-dimensional, 3D, space for performing two-dimensional, 2D, neural rendering, comprising:

receiving a query input (110) that specifies a view that is requested for rendering of a 2D image (191, 192) from a 3D scene (110, 510), wherein the query input (110) comprises coordinates (512) and a view direction of a query point (511) of the 3D scene (110, 510) in the 3D space, wherein the view direction represents a direction passing through a query point (511) corresponding to a pixel from the viewpoint facing the 2D image (191, 192) to be rendered;
extracting real-valued reference feature values (522, 546) around the query point (511) from feature values in a real number format of a real-valued feature grid (520, 541, 542, 543) representing the 3D scene (510);
determining binary reference feature values (532, 556) in a binary format of a binary feature grid (530, 551, 552, 553) by binarizing the real-valued reference feature values (522, 546);
determining an input feature value (561, 562) in the real number format using the binary reference feature values (532, 556); and
training the NSR, model (570) to generate a query output (130) corresponding to the query input (110) by using the input feature value (561, 562) in the real number format as an input of the NSR model (570), wherein the query output (130) comprises a volume density (573) and color information (574) for the query point (511) and view direction in the query input (110).

**2.** The training method according to claim 1, wherein the determining of the input feature value (561, 562) comprises: determining the input feature value (561, 562) by performing an interpolation operation based on the binary reference feature values (556).

**3.** The training method according to claim 1 or 2, wherein the real-valued feature grid (520, 542) comprises:

a 3D real-valued feature grid (520) representing the 3D scene (510), and
a two-dimensional, 2D, real-valued feature grid (542) representing a 2D scene in which the 3D scene (510) is projected onto a 2D plane, and
the binary feature grid (530, 552) comprises:

a 3D binary feature grid (530) corresponding to a binary version of the 3D real-valued feature grid (520), and
a 2D binary feature grid (552) corresponding to a binary version of the 2D real-valued feature grid (542).

**4.** The training method according to claim 3, wherein the extracting of the real-valued reference feature values (522, 546) comprises:

extracting first real-valued reference feature values (522) around the query point (521) from the 3D real-valued feature grid (520);
determining a 2D point (545) by projecting the query point (544) onto the 2D plane; and
extracting second real-valued reference feature values (546) around the 2D point (545) from the 2D real-valued feature grid (541, 542, 543),

wherein the determining of the binary reference feature values (532, 556) comprises:

determining first binary reference feature values (532) by binarizing the first real-valued reference feature values (522); and
determining second binary reference feature values (556) by binarizing the second real-valued reference feature values (546).

**5.** The training method according to claim 4, wherein the input feature value (561, 562) comprises a first input feature value (561) and a second input feature value (562), and
wherein the determining of the input feature value (561) comprises:

determining the first input feature value (561) by performing an interpolation operation based on the first binary reference feature values (522); and
determining the second input feature value (562) by performing an interpolation operation based on the second binary reference feature values (532).

**6.** The training method according to any of the previous claims, wherein the real-valued feature grid (520, 541, 542, 543) and the binary feature grid (530, 551, 552, 553) have a same size, and
positions of the real-valued reference feature values (522, 546) in the real-valued feature grid respectively correspond to positions of the binary reference feature values (532, 556) in the binary feature grid (530, 551, 552, 553) in a one-to-one correspondence.

**7.** The training method according to any of the previous claims, further comprising:

applying a sign function for forward propagation of the real-valued feature grid (520, 541, 542, 543) and the binary feature grid (530, 551, 552, 553) and
applying a substitution function of the sign function for backward propagation of the real-valued feature grid (520, 541, 542, 543) and the binary feature grid (530, 551, 552, 553).

**8.** A processor-implemented neural rendering method, comprising:

receiving (710) a query input (210) comprising coordinates (312) and a view direction (351) of a query point (311) of a three-dimensional, 3D, scene (310) in a 3D space;
extracting (720) reference feature values (322, 336) around the query point (311) from feature values in a binary format within a binary feature grid (140, 221) representing the 3D scene;
determining (730) an input feature value (341, 342) in a real number format based on the reference feature values (322, 336) in the binary format;
generating (740) a query output (130, 230) corresponding to the query input (110, 210) by executing a neural scene representation, NSR, model (120, 222) based on the query input (110, 210) and the input feature value (341, 342); and
generating a 2D image (290) of the view direction of the query input by obtaining pixel values for all pixels by

determining the pixel values by performing volume rendering (240) for each pixel of the 2D image (290) using the query output (130, 230) corresponding to the respective pixel, and
wherein the NSR model (120, 222) comprises a neural network trained to generate, based on the query input (110, 210) and the input feature value (341, 342), the query output (130, 230) comprising color information and a volume density by using a real valued feature grid (520, 541, 542, 543) comprising feature values in the real number format.

**9.** The neural rendering method according to claim 8, wherein the determining (730) of the input feature value (341, 342) comprises:
determining (730) the input feature value (341, 342) by performing an interpolation operation based on the reference feature values (322, 336).

**10.** The neural rendering method according to claim 8 or 9, wherein the binary feature grid (320, 331, 332) comprises:

a 3D binary feature grid (320) representing the 3D scene (310), and
a two-dimensional, 2D, binary feature grid (331, 332, 333) representing a 2D scene in which the 3D scene (310) is projected onto a 2D plane.

**11.** The neural rendering method according to claim 10, wherein the extracting (720) of the reference feature values (322, 336) comprises:

extracting first reference feature values (322) around the query point (311) from the 3D binary feature grid;
determining a 2D point (335) by projecting the query point (311) onto the 2D plane; and
extracting second reference feature values (336) around the 2D point from the 2D binary feature grid (331, 332, 333).

**12.** The neural rendering method according to claim 11, wherein the input feature value (341, 342) comprises a first input feature value (341) and a second input feature value (342), and
the determining of the input feature value (341, 342) comprises:

determining the first input feature value (341) by performing an interpolation operation based on the first reference feature values (322); and
determining the second input feature value (342) by performing an interpolation operation based on the second reference feature values (336).

**13.** A non-transitory computer-readable storage medium storing instructions that, when executed by a processor, cause the processor to perform the method according to any of the previous claims.

**14.** An electronic device (1000) comprising:

a processor (1010); and
a memory (1020) configured to store instructions executable by the processor (1010),
wherein, in response to the instructions being executed by the processor (1010), the processor is configured to perform the method according to any of the claims 1 - 12

**Patentansprüche**

**1.** Prozessorimplementiertes Trainingsverfahren zum Trainieren eines neuronalen Szenendarstellungs-, NSR-, Modells (570), um Szenen eines dreidimensionalen, 3D, Raums zum Durchführen von zweidimensionalem, 2D, neuronalem Rendering darzustellen, umfassend:

Empfangen einer Abfrageeingabe (110), die eine Ansicht, die zum Rendern eines 2D-Bildes (191, 192) angefordert wird, aus einer 3D-Szene (110, 510) spezifiziert, wobei die Abfrageeingabe (110) Koordinaten (512) und eine Blickrichtung eines Abfragepunktes (511) der 3D-Szene (110, 510) in dem 3D-Raum umfasst, wobei die Blickrichtung eine Richtung darstellt, die durch einen Abfragepunkt (511) verläuft, der einem Pixel von dem auf das zu rendernde 2D-Bild (191, 192) gerichteten Blickpunkt entspricht;
Extrahieren von reellwertigen Referenzmerkmalswerten (522, 546) um den Abfragepunkt (511) herum aus

Merkmalswerten in einem reellen Zahlenformat eines reellwertigen Merkmalsgitters (520, 541, 542, 543), das die 3D-Szene (510) darstellt;
Bestimmen von binären Referenzmerkmalswerten (532, 556) in einem binären Format eines binären Merkmalsgitters (530, 551, 552, 553) durch Binarisieren der reellwertigen Referenzmerkmalswerte (522, 546);
Bestimmen eines Eingabemerkmalswertes (561, 562) in dem reellen Zahlenformat unter Verwendung der binären Referenzmerkmalswerte (532, 556); und
Trainieren des NSR-Modells (570), um eine Abfrageausgabe (130) zu erzeugen, die der Abfrageeingabe (110) entspricht, unter Verwendung des Eingabemerkmalswertes (561, 562) in dem reellen Zahlenformat als Eingabe für das NSR-Modell (570), wobei die Abfrageausgabe (130) eine Volumendichte (573) und Farbinformationen (574) für den Abfragepunkt (511) und die Blickrichtung in der Abfrageeingabe (110) umfasst.

2. Trainingsverfahren nach Anspruch 1, wobei das Bestimmen des Eingabemerkmalswertes (561, 562) umfasst: Bestimmen des Eingabemerkmalswertes (561, 562) durch Durchführen einer Interpolationsoperation auf Basis der binären Referenzmerkmalswerte (556).

3. Trainingsverfahren nach Anspruch 1 oder 2, wobei das reellwertige Merkmalsgitter (520, 542) umfasst:

ein reellwertiges 3D-Merkmalsgitter (520), das die 3D-Szene (510) darstellt, und
ein reellwertiges zweidimensionales, 2D, Merkmalsgitter (542), das eine 2D-Szene darstellt, in der die 3D-Szene (510) auf eine 2D-Ebene projiziert wird, und
das binäre Merkmalsgitter (530, 552) umfasst:

ein binäres 3D-Merkmalsgitter (530), das einer binären Version des reellwertigen 3D-Merkmalsgitters (520) entspricht, und
ein binäres 2D-Merkmalsgitter (552), das einer binären Version des reellwertigen 2D-Merkmalsgitters (542) entspricht.

4. Trainingsverfahren nach Anspruch 3, wobei das Extrahieren der reellwertigen Referenzmerkmalswerte (522, 546) umfasst:

Extrahieren von ersten reellwertigen Referenzmerkmalswerten (522) um den Abfragepunkt (521) herum aus dem reellwertigen 3D-Merkmalsgitter (520);
Bestimmen eines 2D-Punktes (545) durch Projizieren des Abfragepunktes (544) auf die 2D-Ebene; und
Extrahieren von zweiten reellwertigen Referenzmerkmalswerten (546) um den 2D-Punkt (545) herum aus dem reellwertigen 2D-Merkmalsgitter (541, 542, 543),
wobei das Bestimmen der binären Referenzmerkmalswerte (532, 556) umfasst:

Bestimmen von ersten binären Referenzmerkmalswerten (532) durch Binarisieren der ersten reellwertigen Referenzmerkmalswerte (522); und
Bestimmen von zweiten binären Referenzmerkmalswerten (556) durch Binarisieren der zweiten reellwertigen Referenzmerkmalswerte (546).

5. Trainingsverfahren nach Anspruch 4, wobei der Eingabemerkmalswert (561, 562) einen ersten Eingabemerkmalswert (561) und einen zweiten Eingabemerkmalswert (562) umfasst, und
wobei das Bestimmen des Eingabemerkmalswertes (561) umfasst:

Bestimmen des ersten Eingabemerkmalswertes (561) durch Durchführen einer Interpolationsoperation auf Basis der ersten binären Referenzmerkmalswerte (522); und
Bestimmen des zweiten Eingabemerkmalswertes (562) durch Durchführen einer Interpolationsoperation auf Basis der zweiten binären Referenzmerkmalswerte (532).

6. Trainingsverfahren nach einem der vorstehenden Ansprüche, wobei das reellwertige Merkmalsgitter (520, 541, 542, 543) und das binäre Merkmalsgitter (530, 551, 552, 553) die gleiche Größe aufweisen, und
Positionen der reellwertigen Referenzmerkmalswerte (522, 546) in dem reellwertigen Merkmalsgitter in einer Eins-zu-Eins-Entsprechung jeweils Positionen der binären Referenzmerkmalswerte (532, 556) in dem binären Merkmalsgitter (530, 551, 552, 553) entsprechen.

7. Trainingsverfahren nach einem der vorstehenden Ansprüche, weiter umfassend:

Anwenden einer Vorzeichenfunktion zur Vorwärtspropagation des reellwertigen Merkmalsgitters (520, 541, 542, 543) und des binären Merkmalsgitters (530, 551, 552, 553), und
Anwenden einer Substitutionsfunktion der Vorzeichenfunktion zur Rückwärtspropagation des reellwertigen Merkmalsgitters (520, 541, 542, 543) und des binären Merkmalsgitters (530, 551, 552, 553).

**8.** Prozessorimplementiertes neuronales Rendering-Verfahren, umfassend:

Empfangen (710) einer Abfrageeingabe (210), die Koordinaten (312) und eine Blickrichtung (351) eines Abfragepunktes (311) einer dreidimensionalen, 3D, Szene (310) in einem 3D-Raum umfasst;
Extrahieren (720) von Referenzmerkmalswerten (322, 336) um den Abfragepunkt (311) herum aus Merkmalswerten in einem binären Format innerhalb eines binären Merkmalsgitters (140, 221), das die 3D-Szene darstellt;
Bestimmen (730) eines Eingabemerkmalswertes (341, 342) in einem reellen Zahlenformat auf Basis der Referenzmerkmalswerte (322, 336) in dem binären Format;
Erzeugen (740) einer Abfrageausgabe (130, 230), die der Abfrageeingabe (110, 210) entspricht, durch Ausführen eines neuronalen Szenendarstellungs-, NSR-, Modells (120, 222) auf Basis der Abfrageeingabe (110, 210) und des Eingabemerkmalswertes (341, 342); und
Erzeugen eines 2D-Bildes (290) der Blickrichtung der Abfrageeingabe durch Erhalten von Pixelwerten für alle Pixel durch Bestimmen der Pixelwerte durch Durchführen von Volumenrendering (240) für jedes Pixel des 2D-Bildes (290) unter Verwendung der Abfrageausgabe (130, 230), die dem jeweiligen Pixel entspricht, und
wobei das NSR-Modell (120, 222) ein neuronales Netzwerk umfasst, das darauf trainiert ist, auf Basis der Abfrageeingabe (110, 210) und des Eingabemerkmalswertes (341, 342) die Farbinformationen und eine Volumendichte umfassende Abfrageausgabe (130, 230) unter Verwendung eines reellwertigen Merkmalsgitters (520, 541, 542, 543), das Merkmalswerte in dem reellen Zahlenformat umfasst, zu erzeugen.

**9.** Neuronales Rendering-Verfahren nach Anspruch 8, wobei das Bestimmen (730) des Eingabemerkmalswertes (341, 342) umfasst:
Bestimmen (730) des Eingabemerkmalswertes (341, 342) durch Durchführen einer Interpolationsoperation auf Basis der Referenzmerkmalswerte (322, 336).

**10.** Neuronales Rendering-Verfahren nach Anspruch 8 oder 9, wobei das binäre Merkmalsgitter (320, 331, 332) umfasst:

ein binäres 3D-Merkmalsgitter (320), das die 3D-Szene (310) darstellt, und
ein binäres zweidimensionales, 2D, Merkmalsgitter (331, 332, 333), das eine 2D-Szene darstellt, in der die 3D-Szene (310) auf eine 2D-Ebene projiziert wird.

**11.** Neuronales Rendering-Verfahren nach Anspruch 10, wobei das Extrahieren (720) der Referenzmerkmalswerte (322, 336) umfasst:

Extrahieren von ersten Referenzmerkmalswerten (322) um den Abfragepunkt (311) herum aus dem binären 3D-Merkmalsgitter;
Bestimmen eines 2D-Punktes (335) durch Projizieren des Abfragepunktes (311) auf die 2D-Ebene; und
Extrahieren von zweiten Referenzmerkmalswerten (336) um den 2D-Punkt herum aus dem binären 2D-Merkmalsgitter (331, 332, 333).

**12.** Neuronales Rendering-Verfahren nach Anspruch 11, wobei der Eingabemerkmalswert (341, 342) einen ersten Eingabemerkmalswert (341) und einen zweiten Eingabemerkmalswert (342) umfasst, und
das Bestimmen des Eingabemerkmalswertes (341, 342) umfasst:

Bestimmen des ersten Eingabemerkmalswertes (341) durch Durchführen einer Interpolationsoperation auf Basis der ersten Referenzmerkmalswerte (322); und
Bestimmen des zweiten Eingabemerkmalswertes (342) durch Durchführen einer Interpolationsoperation auf Basis der zweiten Referenzmerkmalswerte (336).

**13.** Nichtflüchtiges, computerlesbares Speichermedium, das Anweisungen speichert, die, wenn sie von einem Prozessor ausgeführt werden, bewirken, dass der Prozessor das Verfahren nach einem der vorstehenden Ansprüche durchführt.

**14.** Elektronische Vorrichtung (1000), umfassend:

einen Prozessor (1010); und
einen Speicher (1020), der so konfiguriert ist, dass er Anweisungen speichert, die von dem Prozessor (1010) ausgeführt werden können,
wobei der Prozessor so konfiguriert ist, dass er in Reaktion darauf, dass die Anweisungen von dem Prozessor (1010) ausgeführt werden, das Verfahren nach einem der Ansprüche 1-12 durchführt.

## Revendications

**1.** Procédé d'entraînement mis en œuvre sur processeur pour entraîner un modèle de représentation de scène neuronale, NSR (570) à représenter des scènes d'un espace tridimensionnel, 3D, pour effectuer un rendu neuronal bidimensionnel, 2D, comprenant :

la réception d'une entrée de requête (110) qui spécifie une vue qui est demandée pour le rendu d'une image 2D (191, 192) à partir d'une scène 3D (110, 510), dans lequel l'entrée de requête (110) comprend des coordonnées (512) et une direction de vue d'un point de requête (511) de la scène 3D (110, 510) dans l'espace 3D, dans lequel la direction de vue représente une direction passant par un point de requête (511) correspondant à un pixel du point de vue faisant face à l'image 2D (191, 192) à rendre ;
l'extraction de valeurs de caractéristiques de référence à valeurs réelles (522, 546) autour du point de requête (511) à partir de valeurs de caractéristiques au format de nombre réel d'une grille de caractéristiques à valeurs réelles (520, 541, 542, 543) représentant la scène 3D (510) ;
la détermination de valeurs de caractéristiques de référence binaires (532, 556) dans un format binaire d'une grille de caractéristiques binaires (530, 551, 552, 553) en binarisant les valeurs de caractéristiques de référence à valeurs réelles (522, 546) ;
la détermination d'une valeur de caractéristiques d'entrée (561, 562) au format de nombre réel en utilisant les valeurs de caractéristique de référence binaires (532, 556) ; et
l'entraînement du modèle NSR (570) pour générer une sortie de requête (130) correspondant à l'entrée de requête (110) en utilisant la valeur de caractéristiques d'entrée (561, 562) au format de nombre réel comme entrée du modèle NSR (570), dans lequel la sortie de requête (130) comprend une densité volumique (573) et des informations de couleur (574) pour le point de requête (511) et la direction de vue dans l'entrée de requête (110).

**2.** Procédé d'entraînement selon la revendication 1, dans lequel la détermination de la valeur de caractéristiques d'entrée (561, 562) comprend :
la détermination de la valeur de caractéristiques d'entrée (561, 562) en effectuant une opération d'interpolation sur la base des valeurs de caractéristiques de référence binaires (556).

**3.** Procédé d'entraînement selon la revendication 1 ou 2, dans lequel la grille de caractéristiques à valeurs réelles (520, 542) comprend :

une grille de caractéristiques à valeurs réelles 3D (520) représentant la scène 3D (510), et
une grille de caractéristiques à valeurs réelles bidimensionnelle, 2D (542) représentant une scène 2D dans laquelle la scène 3D (510) est projetée sur un plan 2D, et
la grille de caractéristiques binaires (530, 552) comprend :

une grille de caractéristiques binaires 3D (530) correspondant à une version binaire de la grille de caractéristiques à valeurs réelles 3D (520), et
une grille de caractéristiques binaires 2D (552) correspondant à une version binaire de la grille de caractéristiques à valeurs réelles 2D (542).

**4.** Procédé d'entraînement selon la revendication 3, dans lequel l'extraction des valeurs de caractéristiques de référence à valeurs réelles (522, 546) comprend :

l'extraction de premières valeurs de caractéristiques de référence à valeurs réelles (522) autour du point de requête (521) à partir de la grille de caractéristiques à valeurs réelles 3D (520) ;
la détermination d'un point 2D (545) en projetant le point de requête (544) sur le plan 2D ; et
l'extraction de secondes valeurs de caractéristiques de référence à valeurs réelles (546) autour du point 2D (545)

à partir de la grille de caractéristiques à valeurs réelles 2D (541, 542, 543), dans lequel la détermination des valeurs de caractéristiques référence binaires (532, 556) comprend :

la détermination de premières valeurs de caractéristiques de référence binaires (532) en binarisant les premières valeurs de caractéristiques de référence à valeurs réelles (522) ; et
la détermination de secondes valeurs de caractéristique de référence binaires (556) en binarisant les secondes valeurs de caractéristiques de référence à valeurs réelles (546).

**5.** Procédé d'entraînement selon la revendication 4, dans lequel la valeur de caractéristiques d'entrée (561, 562) comprend une première valeur de caractéristiques d'entrée (561) et une seconde valeur de caractéristiques d'entrée (562), et
dans lequel la détermination de la valeur de caractéristiques d'entrée (561) comprend :

la détermination de la première valeur de caractéristiques d'entrée (561) en effectuant une opération d'interpolation sur la base des premières valeurs de caractéristiques de référence binaires (522) ; et
la détermination de la seconde valeur de caractéristiques d'entrée (562) en effectuant une opération d'interpolation sur la base des secondes valeurs de caractéristiques de référence binaires (532).

**6.** Procédé d'entraînement selon l'une quelconque des revendications précédentes, dans lequel la grille de caractéristiques à valeurs réelles (520, 541, 542, 543) et la grille de caractéristiques binaires (530, 551, 552, 553) présentent la même taille, et
des positions des valeurs de caractéristiques de référence à valeurs réelles (522, 546) dans la grille de caractéristiques à valeurs réelles correspondent respectivement à des positions des valeurs de caractéristiques de référence binaires (532, 556) dans la grille de caractéristiques binaires (530, 551, 552, 553) dans une correspondance biunivoque.

**7.** Procédé d'entraînement selon l'une quelconque des revendications précédentes, comprenant en outre :

l'application d'une fonction signe pour la propagation avant de la grille de caractéristiques à valeurs réelles (520, 541, 542, 543) et de la grille de caractéristiques binaires (530, 551, 552, 553) et
l'application d'une fonction de substitution de la fonction signe pour la propagation arrière de la grille de caractéristiques à valeurs réelles (520, 541, 542, 543) et de la grille de caractéristiques binaires (530, 551, 552, 553).

**8.** Procédé de rendu neuronal mis en œuvre par processeur, comprenant :

la réception (710) d'une entrée de requête (210) comprenant des coordonnées (312) et une direction de vue (351) d'un point de requête (311) d'une scène tridimensionnelle, 3D (310) dans un espace 3D ;
l'extraction (720) de valeurs de caractéristiques de référence (322, 336) autour du point de requête (311) à partir de valeurs de caractéristiques au format binaire dans une grille de caractéristiques binaires (140, 221) représentant la scène 3D ;
la détermination (730) d'une valeur de caractéristiques d'entrée (341, 342) dans un format de nombre réel sur la base des valeurs de caractéristiques de référence (322, 336) au format binaire ;
la génération (740) d'une sortie de requête (130, 230) correspondant à l'entrée de requête (110, 210) en exécutant un modèle de représentation de scène neuronale, NSR (120, 222) sur la base de l'entrée de requête (110, 210) et de la valeur de caractéristiques d'entrée (341, 342) ; et
la génération d'une image 2D (290) de la direction de vue de l'entrée de requête en obtenant des valeurs de pixels pour tous les pixels en déterminant les valeurs de pixels en effectuant un rendu volumique (240) pour chaque pixel de l'image 2D (290) en utilisant la sortie de requête (130, 230) correspondant au pixel respectif, et
dans lequel le modèle NSR (120, 222) comprend un réseau neuronal entraîné à générer, sur la base de l'entrée de requête (110, 210) et de la valeur de caractéristiques d'entrée (341, 342), la sortie de requête (130, 230) comprenant des informations de couleur et une densité volumique en utilisant une grille de caractéristiques à valeurs réelles (520, 541, 542, 543) comprenant des valeurs de caractéristiques au format de nombre réel.

**9.** Procédé de rendu neuronal selon la revendication 8, dans lequel la détermination (730) de la valeur de caractéristiques d'entrée (341, 342) comprend :
la détermination (730) de la valeur de caractéristiques d'entrée (341, 342) en effectuant une opération d'interpolation sur la base des valeurs de caractéristiques de référence (322, 336).

**10.** Procédé de rendu neuronal selon la revendication 8 ou 9, dans lequel la grille de caractéristiques binaires (320, 331, 332) comprend :

une grille de caractéristiques binaires 3D (320) représentant la scène 3D (310), et
une grille de caractéristiques binaires bidimensionnelle, 2D (331, 332, 333) représentant une scène 2D dans laquelle la scène 3D (310) est projetée sur un plan 2D.

**11.** Procédé de rendu neuronal selon la revendication 10, dans lequel l'extraction (720) des valeurs de caractéristiques de référence (322, 336) comprend :

l'extraction de premières valeurs de caractéristiques de référence (322) autour du point de requête (311) à partir de la grille de caractéristiques binaires 3D ;
la détermination d'un point 2D (335) en projetant le point de requête (311) sur le plan 2D ; et
l'extraction de secondes valeurs de caractéristiques de référence (336) autour du point 2D à partir de la grille de caractéristiques binaires 2D (331, 332, 333).

**12.** Procédé de rendu neuronal selon la revendication 11, dans lequel la valeur de caractéristiques d'entrée (341, 342) comprend une première valeur de caractéristiques d'entrée (341) et une seconde valeur de caractéristiques d'entrée (342), et
la détermination de la valeur de caractéristiques d'entrée (341, 342) comprend :

la détermination de la première valeur de caractéristiques d'entrée (341) en effectuant une opération d'interpolation sur la base des premières valeurs de caractéristiques de référence (322) ; et
la détermination de la seconde valeur de caractéristiques d'entrée (342) en effectuant une opération d'interpolation sur la base des secondes valeurs de caractéristiques de référence (336).

**13.** Support de stockage non transitoire lisible par ordinateur stockant des instructions qui, lorsqu'elles sont exécutées par un processeur, amènent le processeur à effectuer le procédé selon l'une quelconque des revendications précédentes.

**14.** Dispositif électronique (1000) comprenant :

un processeur (1010) ; et
une mémoire (1020) configurée pour stocker des instructions exécutables par le processeur (1010),
dans lequel, en réponse aux instructions exécutées par le processeur (1010), le processeur est configuré pour mettre en œuvre le procédé selon l'une quelconque des revendications 1-12.

140
120
NSR model
(RGB, σ)
110
Ray 2
Ray 1
130
Ray 1
σ
151
191
Ray 2
σ
152
Ray Distance
192


FIG. 1

200
Query input
210
Feature grid
221
NSR model
222
Query output
230
Volume
rendering
240
2D image
290

FIG. 2

3D scene
310
Query point
311
Coordinates
312
3D binary
feature grid
320
322
321
2D binary
feature grid
332
334
2D binary
feature grid
331
335
336
2D binary
feature grid
333
Input
feature value
341
Input
feature value
342
NSR model 350
...
Coordinate information 351
Direction information 352
Volume density 353
Color information 354


FIG. 3

Binary feature grid
410
Reference
feature value
402
-1
+1
-1
+1
+1
-1
+1
-1
Query point
401
Interpolation operation
Input
feature value
403

FIG. 4

3D scene
510
Query point
511
Coordinates
512
3D real-valued
feature grid
520
521
522
3D binary
feature grid
530
531
532
2D real-valued
feature grid
541
2D real-valued
feature grid
542
2D real-valued
feature grid
543
544
545
546
2D binary
feature grid
551
2D binary
feature grid
552
2D binary
feature grid
553
555
556
Input
feature value
561
Input
feature value
562
NSR model 570
...
Coordinate information 571
Direction information 572
Volume density 573
Color information 574

FIG. 5

Input feature value 604
Binary feature grid 620
Interpolation operation
+1
-1
+1
-1
Reference feature value 603
Sign operation
Real-valued feature grid 610
Query point 601
Reference feature value 602
-r1
+r2
+r3
-r4

FIG. 6

Start
710
Receive query input including coordinates and view direction of query point of 3D scene in 3D space
720
Extract reference feature values around query point from feature values in binary format of binary feature grid representing 3D scene
730
Determine input feature value in real number format using reference feature values in binary format
740
Generate query output corresponding to query input by executing NSR model based on query input and input feature value
End

FIG. 7

800
Neural rendering apparatus
810
820
Processor
Memory

**FIG. 8**

900
Training apparatus
910
920
Processor
Memory

**FIG. 9**

1000
1010
Processor
1020
Memory
1030
Camera
1080
Storage device
1040
Input device
1050
Output device
1060
Network interface
1070

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **CHRISTIAN REISER et al.** MERF: Memory-Efficient Radiance Fields for Real-time View Synthesis in Unbounded Scenes. *arXiv:2302.12249*
- **LEX YU et al.** PlenOctrees for Real-time Rendering of Neural Radiance Fields. *arXiv:2103.14024*